# EUROPEAN PATENT APPLICATION

(11) **EP 2 424 266 A2**
(43) Date of publication of application: **29.02.2012**
(21) Application number: 11178757.8
(22) Date of filing: 25.08.2011
(51) Int. Cl.: H04N 21/45, H04N 21/4722, H04N 21/466

(54) **Context-aware media interaction**

(30) Priority: 27.08.2010 US 377761 P; 05.04.2011 US 80100
(71) Applicant: SAMSUNG ELECTRONICS CO., LTD., Suwon-si Gyeonggi-do 442-742 (KR)
(72) Inventor: Zhu, Yingnan, Irvine, CA California 92612 (US); Lovelace, Michael R., Irvine, CA California 92618 (US); Zheng, Xing, Irvine, CA California 92604 (US); Gicklhorn, Daniel P., Irvine, CA California 92620 (US); Tran, Dang, Laguna Niguel, CA California 92677 (US)
(74) Representative: Robinson, Ian Michael

(57) **Abstract**

In a first embodiment of the present invention, a method for enhancing full-app content playing on a first device is provided, the method comprising: running one or more micro-apps simultaneously with the full-app content playing on the first device; for each of the micro-apps: retrieving full-app content context information regarding the media; querying a micro-app partner using the full-app content context information; receiving results from the micro-app partner; and displaying or playing at least a portion of the received results.

## Description

This application claims the benefit of U.S. Patent Application No. 13/080,100, filed April 5, 2011, and U.S. Provisional Patent Application No. 61/377,761, filed August 27, 2010.

### BACKGROUND OF THE INVENTION

### 1. Field of the Invention

The present invention relates to consumer electronics. More specifically the present invention relates to the addition of context-aware interaction to media playing.

### 2. Description of the Related Art

The current media playing experience is, for the most part, a non-interactive and passive experience. For example, when viewing a television program on a television, the user simply watches the television. When a user listens to a music file on a portable media player, he or she simply listens to the music. While there are mechanisms available that allow users to use the same devices to interact with other data sources, such as a mechanism provided in newer televisions allowing users to surf the Internet while watching a program, the interaction is not geared specifically for the media being played. To the extent that a user wishes to "interact" with elements related to the media being played (such as, for example, purchasing a DVD copy of a television program being viewed), the user must do so manually.

Technologies exist that allow devices that have both media player and Internet-searching abilities to automatically switch between the two based upon the function currently being performed. For example, an options panel having a set of buttons can be used both in a television-playing mode and an Internet-surfing mode, providing a unified viewing experience. However, such technologies are limited to the system simply being aware of the current function being performed by the device, and the system does not take into account other factors, such as the media being played itself.

Furthermore, media playing is currently a single-device experience. While there may be any number of users watching or hearing media from a single device (such as a family sitting down and watching television together), the experience is limited to that single-device. It is becoming more and more prevalent, however, for there to be multiple accessible (and potentially Internet-enabled) devices usable within the same general area. For example, many individuals now carry cellular phones or other mobile communications devices with them at all times, many of which are Internet-enabled. Indeed, some mobile phones are "smart" enough to be considered mini-computers rather than what traditionally would be considered a phone. Additionally, tablet computers are becoming more prevalent, as are digital picture frames, which are also becoming Internet (or at least home network) enabled.

What is needed is a solution that improves upon these mechanisms.

### SUMMARY OF THE INVENTION

According to the present invention there is provided an apparatus and method as set forth in the appended claims. Other features of the invention will be apparent from the dependent claims, and the description which follows. In a first embodiment, a method for enhancing full-app content playing on a first device is provided, the method comprising: running one or more micro-apps simultaneously with the full-app content playing on the first device; for each of the micro-apps: retrieving full-app content context information regarding the media; querying a micro-app partner using the full-app content context information; receiving results from the micro-app partner; and displaying or playing at least a portion of the received results.

In a second embodiment, a system is provided comprising: a shared device for playing media; a plurality of interaction devices in communication with the shared device, each interaction device comprising: a user interface designed to receive user input; and a display; and one or more micro-apps, wherein the micro-apps are located on either the shared device or each of the plurality of interaction devices, wherein the micro-apps are designed to: query one or more micro-app partners for auxiliary content for the playing media; and interact with the user interface and display on each of the plurality of interaction devices to display the auxiliary content on the interaction devices, receive additional input from users pertaining to the auxiliary content, re-query the one or more micro-app partners based upon the additional input, and display results of the re-querying on the display.

In a third embodiment, a method for operating a first interaction device in a system having a shared device and a plurality of interaction devices is provided, the method comprising: running a micro-app while full-app content is playing on the shared device; retrieving full-app content context information regarding the media; querying, using the micro-app, a micro-app partner using the full-app content context information: receiving results from the micro-app partner; and displaying the results from the micro-app partner on a display on the first interaction device while the full-app content is playing on the shared device.

In a fourth embodiment, a shared device is provided comprising: means for playing media; means for running one or more micro-apps simultaneously with the full-app content playing; means for retrieving full-app content context information regarding the media; means for querying a micro-app partner using the full-app content context information; means for receiving results from the micro-app partner; and means for transmitting the received results to one or more interaction devices for display on the one or more interaction devices while the full-app content is playing on the shared device.

### BRIEF DESCRIPTION OF THE DRAWINGS

The present invention will be readily understood by the following detailed description in conjunction with the accompanying drawings, wherein like reference numerals designate like structural elements, and in which:

FIG. 1 is an example of a system in accordance with an embodiment of the present invention.

FIG. 2 is an example of shrinking media to a corner of a television to allow room for the TV+ experience in accordance with an embodiment of the present invention.

FIG. 3 is a diagram illustrating an example of the content on a television and smart phone for a particular micro-app in accordance with an embodiment of the present invention.

FIG. 4 is a diagram illustrating an alternative presentation for the dashboard of FIG. 2 in accordance with an embodiment of the present invention.

FIG. 5 is a diagram illustrating an alternative presentation for a TV+ interface in accordance with an embodiment of the present invention.

FIG. 6 is a diagram illustrating various interfaces to and from a TV+ main screen in accordance with an embodiment of the present invention.

FIG. 7 is a diagram illustrating different modules and how information flows between them in accordance with an embodiment of the present invention.

FIG. 8 depicts example hardware components in a shared device and one or more interaction devices, capable of implementing embodiments of the method and system disclosed herein.

FIG. 9 is a flow diagram illustrating a method for enhancing full-app content playing on a first device in accordance with an embodiment of the present invention.

FIG. 10 is a flow diagram illustrating a method for operating an interaction device in a system having a shared device and a plurality of interaction devices, in accordance with an embodiment of the present invention.

FIG. 11 is a flow diagram illustrating a method for operating a shared device in a system having the shared device and a plurality of interaction devices in accordance with an embodiment of the present invention.

### DETAILED DESCRIPTION OF THE INVENTION

Reference will now be made in detail to specific embodiments of the invention including the best modes contemplated by the inventors for carrying out the invention. Examples of these specific embodiments are illustrated in the accompanying drawings. While the invention is described in conjunction with these specific embodiments, it will be understood that it is not intended to limit the invention to the described embodiments. On the contrary, it is intended to cover alternatives, modifications, and equivalents as may be included within the scope of the invention as defined by the appended claims. In the following description, specific details are set forth in order to provide a thorough understanding of the present invention. The present invention may be practiced without some or all of these specific details. In addition, well known features may not have been described in detail to avoid unnecessarily obscuring the invention.

In accordance with the present invention, the components, process steps, and/or data structures may be implemented using various types of operating systems, programming languages, computing platforms, computer programs, and/or general purpose machines. In addition, those of ordinary skill in the art will recognize that devices of a less general purpose nature, such as hardwired devices, field programmable gate arrays (FPGAs), application specific integrated circuits (ASICs), or the like, may also be used without departing from the scope and spirit of the inventive concepts disclosed herein. The present invention may also be tangibly embodied as a set of computer instructions stored on a computer readable medium, such as a memory device.

An embodiment of the present invention introduces the concept of a "micro-app" (short for micro-application), which resides on one or more user devices. These micro-apps are designed to utilize context information in order to query one or more micro-app partners for result information. The context information can involve the media itself, the user, the device, or the general environment. Once this result information is received from the micro-app partner(s), it can be presented on the user devices. In this manner, the micro-apps provide the ability to automatically retrieve results relevant to the currently-playing media and display them to viewers as the media is being played.

In another embodiment of the present invention, a system of devices is utilized, wherein some of the devices play the media and other of the devices perform interaction with individual users to obtain auxiliary information for the media. In such a system, there may be a shared device in which the media is played, and a plurality of interaction devices (typically unshared) on which the interaction aspects are performed. In this manner, for example, each user watching a television (shared device) can personally interact with content providers regarding the program on their own devices (e.g., personal mobile phones).

It should be noted that it may be preferable in many circumstances to utilize both of the above embodiments together. For example, a system of devices having a plurality of interaction devices and a shared device can be used, and then either the interaction devices or the shared device (or both) can contain micro-apps that capture context information and interact with content providers to update content on either the interaction devices or the shared device (or both). Various example implementations will be described in more detail later in this document.

The context information used to query the one or more content providers can be retrieved from a number of different sources. One source is the media being played itself. This type of context information may be called "media content context information" and may include any information about the media itself. One common source for such information can be metadata that accompanies the media. For television broadcasts, this information may be embedded in a digital broadcast stream. For over the top (OTT) video on demand (VOD) videos or photos, this information may be encoded in the downloaded media files, or may be transmitted separately. For DVD or Blu-Ray™ discs, this information may be encoded on the disk itself (such as in a dedicated metadata file), or may be available externally, such as using an external GD3 identification database. Normal video, photo, or music files stored on a hard disk drive can contain metadata information within the files themselves, such as the ID3 metadata in an mp3 file, or an xif file for a digital camera. Digital Living Network Alliance (DLNA) streams can include embedded metadata as well. Example of media content context information may include titles, genres, actors, directors, running times, scene information, music tracks, composers, authors, etc. Additional file streams, such as from social networking websites or from video streaming web sites can also be utilized with embodiments of the present invention. Additionally, files from non-media applications can also be utilized, such as news, maps, games, etc.

It should also be noted that the term "content provider" as used in this document shall be construed broadly to cover any entity that provides information or services that may be desired by the user. This may include textual information, graphical information, shopping capabilities, mapping tools, and so on. While some in the art make a distinction between "service provider" and "content provider," others in the art recognize that many providers blur the line between providing content and providing service and simply group all providers under the single title of "content provider." It is this latter definition that is used throughout this document.

It should also be noted that the term "media" as used in this document shall be interpreted broadly to include more than just traditional video, photos, and text, but also other information for user viewing or listening that is transmitted to a shared or interaction device. Thus, "media" can include, for example, text in a newsreader application, maps in a mapping application, or graphics in a game application, and thus the "media content context information" can include context information regarding these items as well. In some places in this document, the term "full-app content" is used in the place of media content to make explicitly clear that even non-media related content can be used as the basis for context information and for retrieving results related to the full-app content. Furthermore, this "full-app content" can come from many sources, including live television, media players, micro-app results, DVDs, HDMI ports, etc.

It should also be noted that the term "micro-app" as used in this document shall be interpreted broadly to include ay application that can be installed on a device that queries a content provider. However, in some embodiments the micro-app is connected to another application or service and provides limited micro-functions within the full application or service (called "full-app"). For example, an Amazon™ application might provide a full user interface to the Amazon.com™ marketplace, but an Amazon™ micro-app may provide only limited micro-functions (such as automatic search based on context, limited purchasing ability, etc.). A micro-function is a function that performs merely one action, such as "add-to-cart" or "add-to-favorites".

There are various other sources for context information than merely the media or full-app content itself. One such other source for context information is the user. Various information about the user can be retrieved either explicitly or implicitly. For example, a user profile may be stored that contains user information such as age, sex, interests, profession, etc. This type of context information may be useful in determining which information to retrieve from the content providers. For example, if a family is viewing a documentary program about Africa, it may be desirable to deliver to the children pictorial information about lions, giraffes, rhinoceroses, etc. (which can be delivered directly to the children's interaction devices), while simultaneously delivering to the adults textual information about the history of the region being observed on the shared device. By including not only the media content context information but also the user context information, the system is able to deliver such personalization to individual interaction devices.

The user profile is an example of explicitly-specified user context information, but this information may also be deduced from implicit sources. For example, the system may be able to deduce that a user is a child by examining the application usage history (or even just the applications loaded) on the interaction device. If, for example, the device contains a lot of games typically played by young children, it can be deduced that the user of the device is a child.

Another source for context information is the device. Various information about the device can be retrieved either explicitly or implicitly. For example, a device profile may be stored that contains device information such as manufacturer, memory, processor speed, display characteristics, input devices, etc. This type of context information may also be useful in determining which information to retrieve from the micro-app partners. For example, if a family is viewing a comedy program, the system may determine it would be beneficial to distribute relevant information about the lead actor to the various interaction devices, including, for example, information about recent projects that the lead actor is appearing in. If one device has much greater processing speed, memory availability, and display characteristics than another, it may be desirable, for example, to provide a video movie trailer for a recent movie the actor has appeared in to the more powerful interaction device, while the less powerful interaction device receives only textual information about the actor's new movie.

A device profile is an example of explicitly-specified device context information, but this information may also be deduced from implicit sources. For example, the system may be able to deduce that the device has the capability to play high definition video if there are a number of high-definition video files stored in the memory of the device.

Another source for context information is the environment in which the device is operating. This may include a variety of different things, including external environmental information (time of day, temperature, location, etc.) and internal environmental information (operating system, other applications being run simultaneously, etc.). This type of context information may also be useful in determining which information to retrieve from the micro-app partners. For example, if the location of the shared device and interaction devices is "at home," then the additional data downloaded from micro-app partners may be more recreational than if the shared devices and interaction devices is "at work."

External context information can be retrieved from a variety of external sensors or devices. For time of day, for example, a clock device located on a motherboard may be accessed. For location, a global positioning sensor (GPS) or similar tracking device may be utilized. For temperature, a temperature sensor may be utilized (alternatively, location information may be fed to an external database where current temperature can be retrieved for the location).

Another source for context information is social networking data. For example, user status information from social networking web sites or data streams can be examined to determine a current status for the user, which then may be used to aid in serving results. For example, if the user indicated a Facebook™ status as "on vacation," a different set of results may be served than if the user had indicated that he was "at work."

In another embodiment of the preset invention, various filtering may be performed on the results from the micro-app partners prior to displaying the results. This filtering may be performed either on the shared device or on the interaction devices (or both), and this decision may also be based on whether the results are to be displayed on the shared device or the interaction devices (or both). This filtering may be especially useful if results from multiple micro apps (and thus multiple micro-app partners) are being retrieved at the same time. One key type of filtering includes ranking. Here, the results are ranked in order of applicability. This may be determined using an algorithm, and thus algorithm can be designed in any number of ways. In some embodiments, this algorithm may even utilize user, device, and/or environmental context information to aid in determining which content is the most applicable for the particular device at that moment. Other examples of filtering include cross-reference checking and personalization of the search results.

The framework of the present invention allows users to access several services that augment the user experience by using the current context and presenting relevant information, using a micro-app (or multiple micro-apps). In one embodiment, this framework also allows micro-app partners to quickly develop a micro-app that enhances media with their proprietary data. The framework can provide for quick micro-app development by providing basic user interface and API capability for third part developers, allowing them to efficiently create micro-apps that are compatible with the system.

Additionally, a shared data structure schema between micro-apps can be provided, allowing each of the micro-apps to become "context-aware" in a consistent manner. This allows media providers to feel more comfortable with undertaking the necessary steps to encode metadata or otherwise provide context information regarding their media, knowing that many different micro-apps will have access to that context information (as opposed to, for example, just one micro-app, if a proprietary metadata format is used). Thus, a system and a repository can be provided that allows micro-app partners to access a shared context to seamlessly enhance full-app content by providing relevant ancillary information about the content being viewed or heard.

With respect to the embodiment having a shared device with multiple interaction devices, such a system permits users to collaboratively choose an item of interest from a graphical user interface, wherein the preferences are made in each user's private screen of a personal interaction device and the results shared for all users on the shared device. For example, users can collaboratively choose a travel destination, a flight, or a movie, based on multiple user preferences.

Prior art solutions fail to consider a set-up where ancillary information to played media is tailored to the existing context. Prior art solutions also fail to consider pairing separately interaction devices with a shared device to enhance interactivity.

Examples will be provided herein in the context of a television acting as a shared device and multiple handheld devices (depicted as smart phones) acting as interaction devices. As described above, there are merely intended as example implementations, and should not be taken as limiting.

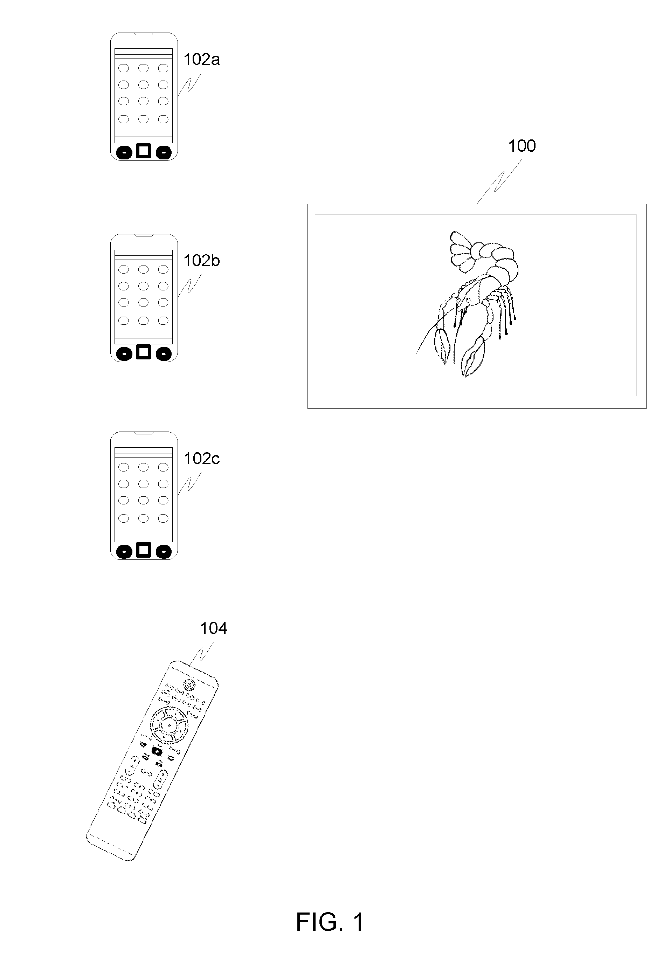

FIG. 1 is an example of a system in accordance with an embodiment of the present invention. Here, the television 100 acts as a shared device. Also included in the system are a series of interaction devices 102a, 102b, 102c, depicted as smart phones. Each of these interaction devices 102a, 102b, 102c may be operated by a different user (not pictured). Also included in the system may be a remote control 104. It should be noted that the remote control 104 may be considered an interaction device in some circumstances, however most remote controls lack a display (or a powerful enough display to display actual results from micro-app partners), and additionally most controls only permit unidirectional communication (from the remote control to the television, not vice-versa). As such, in many implementations the remote control may not be utilized as an interaction device, at least for the results from the micro-app partners and subsequent selections based on those results.

In one embodiment, users can initiate an augmented mode for the television (called TV+ mode) by pressing a button on the remote control 104 or by using one of the interaction devices 102a, 102b, 102c. Alternatively, users can set the television to notify them of available content via a particular micro-app. Hereafter, any interaction with the TV+ mode is assumed to happen via one of the interaction devices 102a, 102b, 102c. Initiating the TV+ mode causes either the current media on the television 100 to shrink to a corner of the screen, allowing room for the TV+ experience, or the creation of an overlay for displaying TV+ content. This enables users to continue watching the current media while being able to interact with the micro-apps in a shared environment. It should be noted that in one embodiment the media playing on television 100 is not altered at all. In this embodiment, the entire TV+ experience can be experienced through the interaction devices 102a, 102b, 102c, and thus the shared media is not interrupted in any way. This allows, for example, users who are not at all interested in the interactive nature of a particular program to completely ignore the interactive aspects. For example, if a grandparent that does not have a smart phone is joining the family in watching a program in front of the shared television, he or she does not need to have any knowledge that the additional ancillary information is being provided to the other members of the family (via their interaction devices).

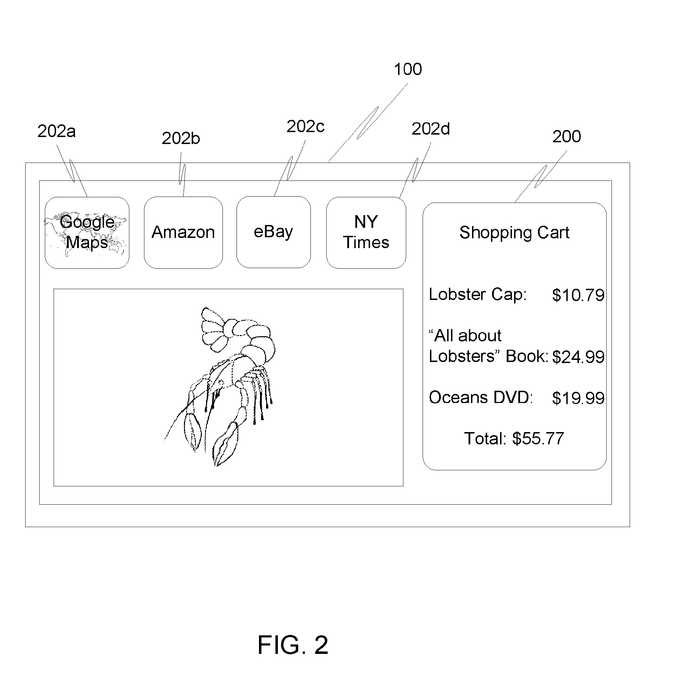

Nevertheless, FIG. 2 is an example of shrinking media to a corner of a television to allow room for the TV+ experience in accordance with an embodiment of the present invention. Here, upon execution of the TV+ mode, users are presented with a dashboard 200 on the television 100 that shows each user a summary of his or her past activity (e.g., items added to shopping cart, or favorites), and different micro-apps 202a, 202b, 202c.

The television dashboard 200 can also display a textual information bar regarding the current content being watched. On the interaction device-side, users can be presented with a list of available micro-apps to interact with along with the current media content. Users can then execute a certain micro-app to receive augmented information about the current media content. Doing so causes both the television and the smart phones to switch to the content retrieved from the selected micro-app while still allocating part of the television screen for current media display and part of the smart phone screen to display its own current content.

On the television-side, users can be navigated to the corresponding micro-app's homepage where, along with the current content, a list of current users logged in can be displayed. On the smart phone side, due to the availability of a personal screen, users can be presented with more information. This may include an information bar displaying textual information about the current media. This may also include a set of items relevant to the current media (retrieved from the micro-app content provided). These items can be grouped into logical categories for easier interactions (e.g., movies, music, toys, merchandise, etc.). This may also include a recommendation bar, whose content gets populated upon the selection of an item in the provided categories. In one implementation, each category can be represented in the form of a tab, allowing users to navigate between categories by selecting different tabs.

In some embodiments, search results (in the form of tags) may be presented in a synchronized fashion on interaction devices and the shared device, which allows the users to view and select items from individual interaction devices while sharing collaboratively on the communal shared device.

Once a user taps an item from a category, the smart phone may populate the recommendation bar with a list of items recommended from the micro-app partners that are related to the item selected by the user. On the television-side, an area can be assigned to each user to display a detailed view of the items selected by each user. The television can also populate a recommendation bar that is a replica of the recommendation bar on the smart phone. Users can then swipe through the recommendations on the smart phone, which causes both the smart phone and the television to show more recommendations to the user. In one implementation, tapping can be used to get more information and recommendations for each item selected by the user on the smart phone. For each micro-app, a default action is predetermined that allows users to finalize their interaction with an element. For example, the default action for an item can be adding it to a shopping cart, checking out an item, adding it to a list of favorites, and so forth. In one implementation, a flick gesture can be used to trigger the default action. Once a default action is performed on an item (e.g., an item is added to a cart), the television can update user activity to reflect the recent action. The main dashboard can also be updated with the most recent user actions. These updates are then shown the next time the TV+ main screen is displayed on the television.

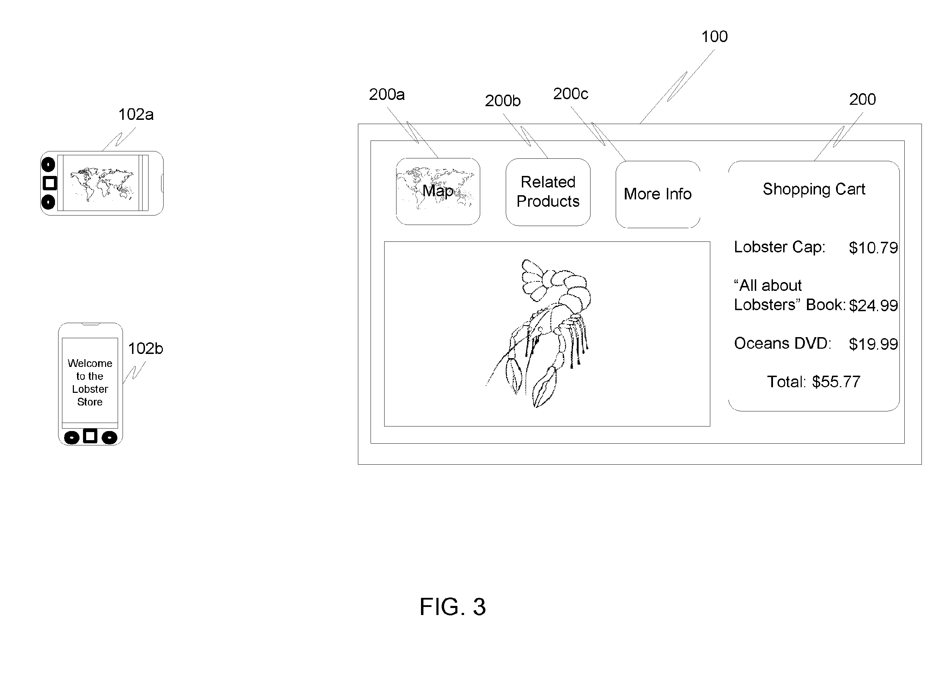

FIG. 3 is a diagram illustrating an example of the content on a television and smart phone for a particular micro-app in accordance with an embodiment of the present invention. Here, as can be seen, different interaction devices 102a, 102b can operate different micro-apps at the same time while the interaction with those micro-apps can also be included on the shared device 100. In the example here, interaction device 102a runs a mapping application that may, for example, display a map of the location at which a documentary about lobsters is being filmed. Interaction device 102b, on the other hand, runs a shopping micro-app (here displaying a "lobster store" where multiple related items are available) where users can browse and purchase merchandise related to the documentary (or just general items that have some relevance to "lobster-related" programming). While not pictured, another interaction device may also run the same shopping micro-app, and the results of the users of both interaction device's purchases may be displayed on the shared application. In that sense, a "family total" can be displayed for all purchases being selected by all interaction devices, and one transaction can take place to actually purchase all of the items, much like a family in a brick-and-mortar store may load all their individual purchases into a single shopping cart before checking out.

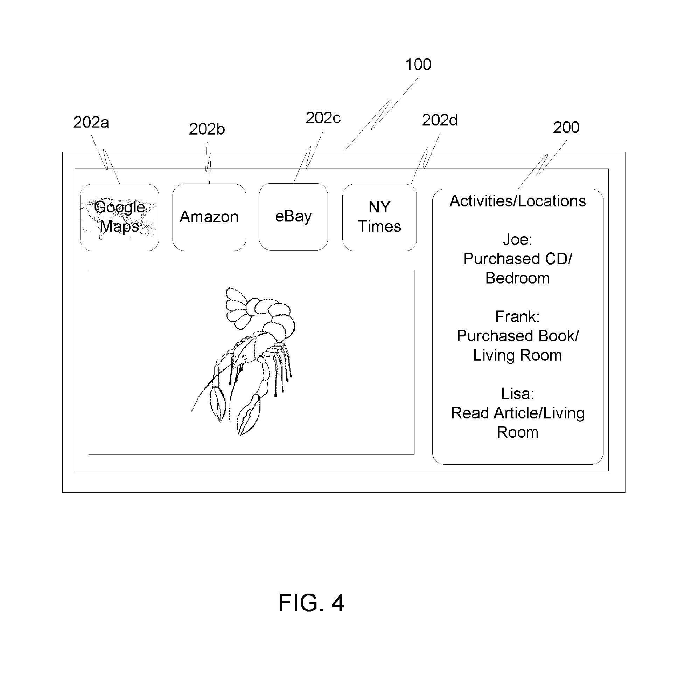

FIG. 4 is a diagram illustrating an alternative presentation for the dashboard of FIG. 2 in accordance with an embodiment of the present invention. Here, instead of displaying a "family total" of purchases, activities and locations of the users are displayed in dashboard 200. Indeed, the dashboard can be used to display any type of information, and is most useful in displaying information that somehow pertains to the multiple users interacting with the shared device 100 through interaction devices (not pictured).

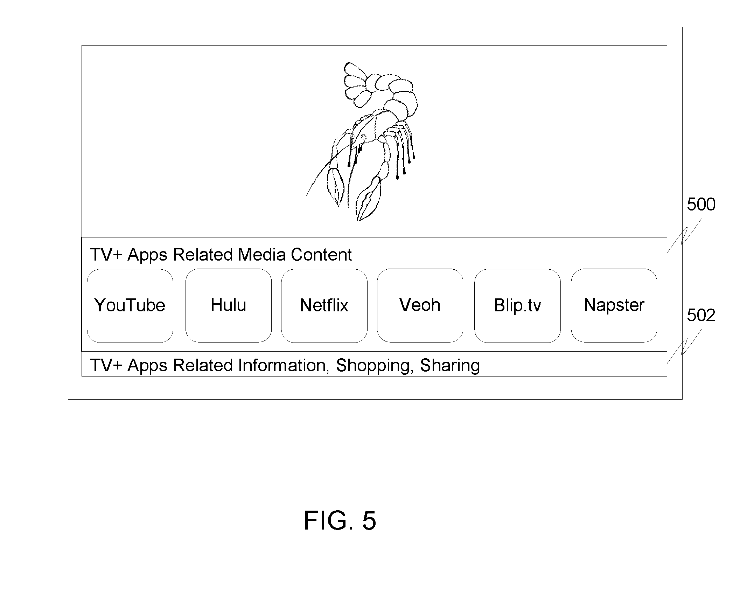

FIG. 5 is a diagram illustrating an alternative presentation for a TV+ interface in accordance with an embodiment of the present invention. Here, a TV+ Apps related media content region 500 is presented including links to micro-apps that contain media content related to the media currently being displayed on the television. The user can then navigate quickly to the various micro-apps having related media content. Additional menus 502 may be provided to easily locate other categories of micro-apps, such as related information, shopping, and sharing.

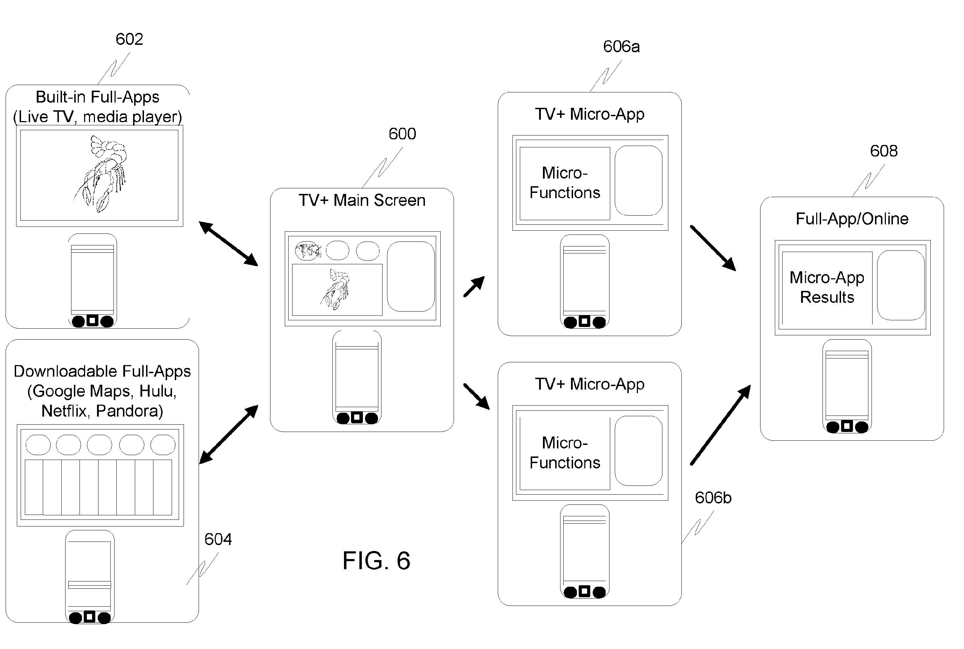

FIG. 6 is a diagram illustrating various interfaces to and from a TV+ main screen in accordance with an embodiment of the present invention. The user may access the TV+ main screen 600 from either a built-in full-app 602 such as live television or from within an executing downloadable full-app 604. The user is able to quickly augment their existing TV watching or application running experience by entering the TV+ main screen 600, as well as quickly go back to their full-app 602 or application running experience 602 from the TV+ main screen. From the TV+ main screen 600, the user can elect to run any of a number of different micro-apps, causing a TV+ micro-app screen 606a, 606b to be displayed. These TV+ micro-app screens 606a, 606b allow the user to perform quick, common micro-commands related to the underlying micro-app partner. At that point, these commands can be passed to the micro-app partner, who provides results that can be displayed in a results screen 608.

As described above, recommended items may be presented to the users based on various factors. One of these factors may be past purchases. An online bookseller, for example, may have records of past purchases of a user and may utilize a knowledge based to intelligently recommend other books that might be interesting to the user. However, other factors may play into these recommendations as well, including user, device, environmental, and social context information, as described earlier.

The system may also be designed to recognize distinct gestures on the interaction devices and to assign certain actions. For example, a user may "swipe left" to receive more detailed information about the related context, or swipe right to return to a higher level in a menu. Indeed, any interactive action can be assigned to such a gesture.

Many of the steps described above can be performed automatically (without user intervention) in certain circumstances. For example, the system can be configured to automatically identify and register interaction devices as they arrive in proximity to the shared device. For example, when a parent (and their accompanying smart phone), arrives home and enters the living room, the shared television in the living room may detect the smart phone in its vicinity and act accordingly. This may include adding the parent to the list of current users, utilizing appropriate micro-apps to provide ancillary information accordingly, etc.

Depending on the media content context information, different micro-apps may provided different amounts ad quality of ancillary information. For example, a retail store micro-app may find more relevant items for a particular movie than another movie, and a mapping application may return more quality results for a documentary having metadata listing a particular city than for a comedy program where location is never mentioned. The TV+ framework may include a ranking/quality assessment module that can identify the micro-apps whose content might be relevant to the current media and can then sort or rank relevant micro-apps or their results according to a developed "quality score".

Another module, called a search keyboard tab generation module, can be included in the framework. This module takes various context information, such as the metadata, the current micro-app, and current users logged into the system as well as the input device, into account to dynamically generate a search query request corresponding to each tab on the result page. It can also use a ranking algorithm to identify the top items to be displayed per each tab.

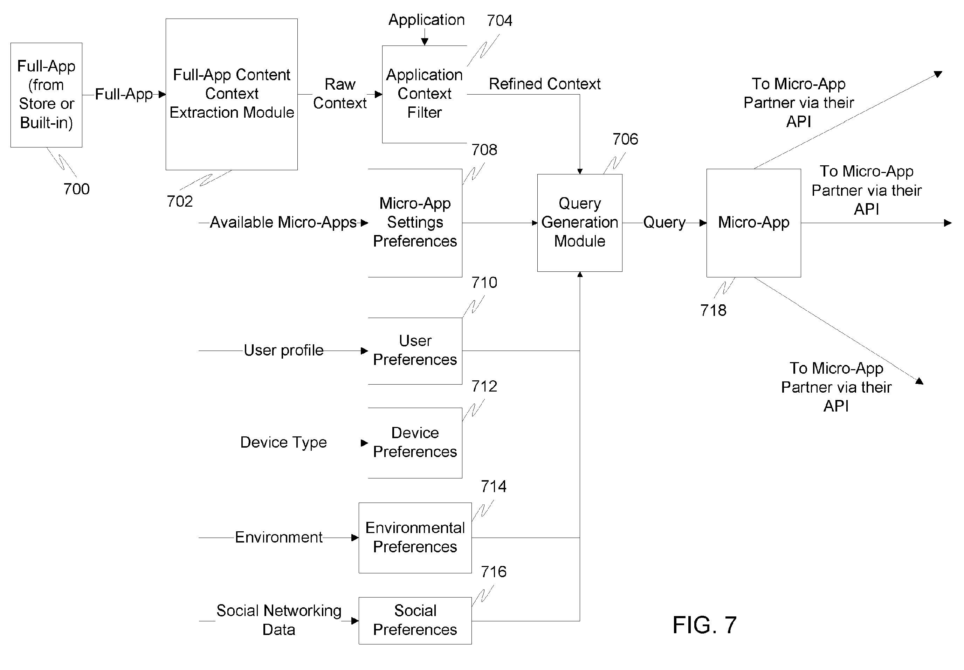

The present framework allows for end-to-end content sharing and information flow. FIG. 7 is a diagram illustrating different modules and how information flows between them in accordance with an embodiment of the present invention. The full-app 700 (downloaded from an app store or built-in to the user device) may play or display some sort of content. This full-app content may be passed to a full-app content context extraction module 702 that extracts the important keywords or metadata from the full-app data. This full app-content may be media that can be played from a number of different sources, such as streaming over the Internet, from the local hard drive of the device, via a television signal, from a Blu-ray player, etc.

An application context filter 704 can aid in extracting the correct information and formatting the results based on the application being used currently. The result is refined context that can be passed to a query generation module 706. Context information from other components may also be made available. This may include, for example, a list of micro-apps to query from a micro-app settings preferences module 708, which takes the available micro-apps as input and narrows the list based on preferences. For example, a shopping application may be available, but the user may have previously selected not to have queries run on the shopping application, and stored that information in micro-app preferences. User context may also be passed to the query generation module 706, generated by a user preferences module 710 capable of reading a user profile. Likewise, device context may also be passed to the query generation module 706 via a device preferences module 712 capable of reading a device type. Environmental context may also be passed to the query generation module 706 via an environmental preferences module 714. Social networking data context may also be passed to the query generation module 706 via a social preferences module 716.

A search query can be formed based on the media content context information (as well as potentially based on other context information). The resulting search query can then be refined according to micro-apps, user and device preferences, and other factors and can then be sent along with dynamically-assigned application tabs to a micro-app 718. The micro-app's task is to receive the search query parameters and customize it according to the micro-app partner's search API to retrieve relevant information for each category. It also standardizes the result set format for shared device and interaction device consumption. The search results produced in the above fashion can be fed into the context filter module again to repeat the above scenario for another micro-app.

The querying itself can take a variety of different forms, largely dependent on the type of micro-app and the type of micro-app partner. For example, if the micro-app partner is a mapping tool, the query may take the form of location information. If the micro-app partner is an online retailer, the query may take the form of a title, actor, or author. Embodiments are also foreseen wherein the micro-app partner takes any type of input and intelligently deciphers it to determine how best to serve content based on the query. For example, the micro-app partner may be a portal to several different services (e.g., financial information, sports information, mapping, online shopping) and the micro-app partner may take the query and determine which of these services to query and then send the query to only the appropriate service.

In order to sync the shared device and interaction device recommendation bar content, the TV+ framework can employ a data transfer scheme that allows data to flow from the television to the smart phones. In the case of recommendations, the smart phones subscribe to receive updates from the television whenever new recommendations are available. Upon selection of an item on a smart phone, the television first uses an adapter to query the micro-app partners to retrieve recommendations. Next, the results are transferred to the smart phone using textual data format such as XML. Upon receipt of the data, the smart phone displays them in the recommendation bar. Updated ancillary content can thus be provided to the interaction devices in three different ways: (a) the micro-apps on the interaction device receive notification for an available update from the micro-app partner and the interaction device notifies the shared device about the availability of a new update; (b) the shared device first receives a notification of the availability of an update and notifies the interaction device(s) for downloading the new update; (c) the micro-app partner notifies the shared device and the interaction device(s) directly of the availability of an update. The actual downloading can also be performed in different ways. In one embodiment, the interaction device(s) receive all updates directly from the micro-app partner and shared device receives the new update from the interaction device(s). In another embodiment, the shared device receives all updates from the micro-app partner and the interaction devices receive the new updates from the shared device. In another embodiment, both the shared device and the interaction device(s) receive each update directly from the micro-app partner.

The present invention also provides for a new source of revenue for hardware or software manufacturers. For example, a manufacturer of a shared television set having a TV+ framework can receive a commission for each item sold using a micro-app running on, or interacting with, the shared television set. Additionally, individual micro-app developers can also share revenue with other micro-app developers to the extent that "leads" developed from one micro-app cause a purchase or other transaction in another micro-app.

In one embodiment, the context-aware system provides a repository that enables micro-app partner to access a shared context to seamlessly enhance the main television content by providing relevant information about the content being watched. The context-aware system uses a set of pre-defined context schemes to allow communication and context-sharing among a disparate set of applications. The context-aware system also provides a standard set of APIs and an interface to micro-app developers to allow rapid deployment of consistent micro-apps.

Each micro-app can be selected to retrieve items related to the content from the current micro-app using an inter-application content publish/subscription scheme. A shared set of keywords along with a scheme allow each micro-app to set certain content to be consumed by another micro-app to retrieve pertinent information. A set of APIs can be used to query each micro-app knowledge base to filter irrelevant information and present the ones relevant to the current context.

XML may be used to facilitate data transfer between the shared device and the interaction devices and also between the micro-apps and the shared device. The interaction devices can subscribe to certain events and commands received from the shared device, each associated with a certain action on the interaction device. In one embodiment, a communication link such as a wired or wireless network connection can connect the interaction devices and the shared device. The framework exposes the basic functionality through a set of APIs for micro-app partners to get and set the current context from/for other micro-apps.

In another embodiment of the present invention, micro-app partner can select from pre-defined user interface templates for quick and consistent integration with other providers.

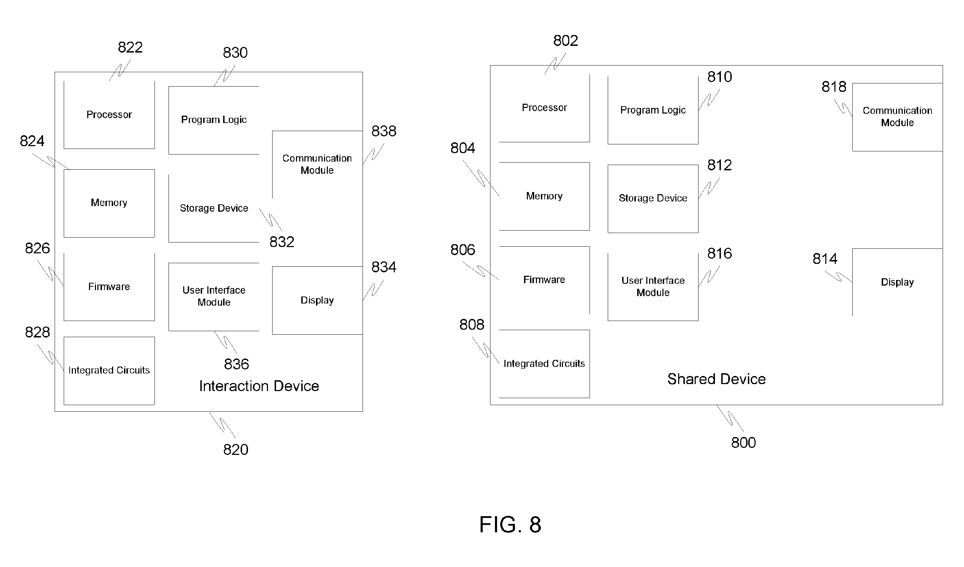

FIG. 8 depicts example hardware components in a shared device and one or more interaction devices, capable of implementing embodiments of the method and system disclosed herein. In one embodiment, the shared device 800 comprises a television having a processor 802, memory 804, firmware 806, integrated circuits 808, program logic 810, a storage device 812, a communal display screen 814, a user interface module 816, and a communication module 818. The communication module 818 may be, for example, a network interface device or a wireless radio transmitter/receiver. In one embodiment, each interaction device 820 comprises a processor 822, memory 824, firmware 826, integrated circuits 828, program logic 830, a storage device 832, a personal display screen 834, a user interface module 836, and a communication module 838. Again, the communication module 838 may be, for example, a network interface device or a wireless radio transmitter/receiver. The shared device may communicate with each interaction device via a wired and/or wireless communication link. In one example embodiment, the shared device and/or interaction devices may communicate with external micro-app partners such as web servers, databases, networks, streaming sources, search engines, etc. via the Internet.

The system disclosed herein increases user engagement by allowing users to explore relevant content from a plurality of services and applications. The system decreases the time-to-build for development of consistent and context-aware micro-apps. The system allows multiple users to interact simultaneously with the shared device, each user having a private screen while the shared device displays the shared public data relevant to all users. The system also removes the burden of typing a search string for each service, hence enabling seamless ad automatic navigation between several micro-apps, and allowing for more intuitive exploration for users.

In another embodiment of the present invention, a "middleware" framework is provided that segregates micro-app partners from the micro-apps (and even fro the micro-app companies, in some embodiments). The framework allows it to not be necessary for the micro-app partners to even be aware of the micro-app companies, and vice-versa. Both entities can simply program against the middleware framework APIs. In this manner, any application or source (e.g., Blu-Ray™, Netflix™, DLNA media, WiseLink, non-media widgets) can collaborate with any other services (micro-apps) without any knowledge of the service convergence or mash-up outcomes. Additionally, the framework can automatically provide other context and a unified user interface for multiple interaction devices. Using various artificial intelligence engines, the framework can automatically improve the quality of micro-service search results. Algorithms can include dynamic lookup tables based on multi-context info.

In yet another embodiment, a micro-app "store" may be provided where users can download various micro-apps. These micro-apps may be built around multiple augmented/orthogonal micro-services while within a full application or service. For example, a streaming movie applications, such as Netflix™, can be linked to a number of different micro-apps that a user can download related to that service, such as a micro-Amazon™ app, a micro-Wikipedia™ app, a micro-Flickr™ app, a micro-Facebook™ app, etc.

It should be noted that there is a distinction between the micro-app dashboard and the micro-app store. The micro-app dashboard is where a user views and runs downloaded applications. As such, typically the micro-app dashboard will only display apps that have been downloaded and are "owned" by the user (or by another authorized user). In the micro-app dashboard, selection of a micro-app will typically result in a micro-app being executed, with the results of the execution also potentially being displayed in the micro-app dashboard. The micro-app store, on the other hand, is another screen where the user is able to view micro-apps that are available for purchase/download. In this screen, the micro-apps presented may not have been downloaded or purchased by the user yet (although in some embodiments past purchases/downloads may be displayed). The purpose of the micro-app store is to provide a location where a user can download/purchase additional micro-apps. As such, selection of a micro-app from the micro-app store will typically result in the micro-app being downloaded (after appropriate authentication and purchase authorization is provided, of course).

In another embodiment, each micro-app has the ability to make their corresponding micro-functions public (e.g., exposing tweet functionality to all micro-apps) or private. This public versus private determination can be made either automatically or manually configured by a user. Settings for this can be saved in various files throughout the system.

In another embodiment, different weights can be assigned to different contexts according to other contexts. For example, a different weight may be assigned to a device of one user versus if that same device were operated by another user.

Various mechanisms to monetize the above processes and systems are also anticipated. In one embodiment, micro-app partners compensate both the system operator or manufacturer (e.g., the operator of the micro-app store) and the media companies that encode their media data with the appropriate metadata (in the appropriate format). This compensation may be, for example, based on purchases made using the micro-apps, such that when a user makes a purchase at the micro-app partner (e.g., buys a related toy from Amazon™), the micro-app store and the media company are compensated out of the proceeds. In another embodiment, the compensation may be based on the number of page views (or "clicks") received at the micro-app partner from micro-apps from the micro-app store and based on media produced by the media companies. Such "per click" compensation may be more beneficial for micro-app partners that do not sell products, but rather generate income based on advertising, such as a mapping micro-app partner. In another embodiment, lump sum payments are simply made periodically as part of a partnership agreement between micro-app partners and the operator of the micro-app store and media companies.

In another embodiment of the present invention, income generated by subscriptions to the media companies (e.g., Netflix™ subscriptions) can be shared with the micro-app store operator, to the extent that the micro-app store creates new subscription opportunities for the media companies.

In another embodiment of the present invention, an afficiliate and referral system is designed to include other entities other than the media companies, micro-app store operator, and micro-app partners. This may include, for example, compensating owners of additional web sites (affiliates) that drive traffic to the micro-app store and from which money is generated for either the media companies or the micro-app partners. The system may be designed to track an affiliate ID as part of this process to ensure proper credit is given. This affiliate ID may be tracked, for example, as part of a cookie stored during a network session.

In another embodiment of the present invention, certain micro-apps may be considered "premium" micro-apps, requiring the user to subscribe or purchase the micro-app from the micro-app store operator. Portions of this income generated may be shared with the media companies and/or micro-app partners.

In another embodiment of the present invention, income generated from the rental or purchase of digital information (e.g., media) from either the media companies or micro-app partners can be shared among the media companies, micro-app store operator, and/or micro-app partners.

In one embodiment of the present invention, the system is extended to a cloud. In this manner, for example, the raw context can be retrieved from any number of different devices in different locations. Consumers have been accumulating volumes of digital assets and using more and more Internet services. Consumers typically access these assets and services using more than one device. A typical consumer may have a desktop computer, a laptop computer, and a cell phone (and possibly other devices as well) that can all be used to access and gather information and media. The trend will continue while huge amounts of services and contents are made available on the Web daily. These assets and services are typically scattered around in personal devices as well as in various informal groupings of information known as clouds. A cloud is a formal or informal grouping of information based on control. The present invention anticipates extending the augmented context systems in a similar manner.

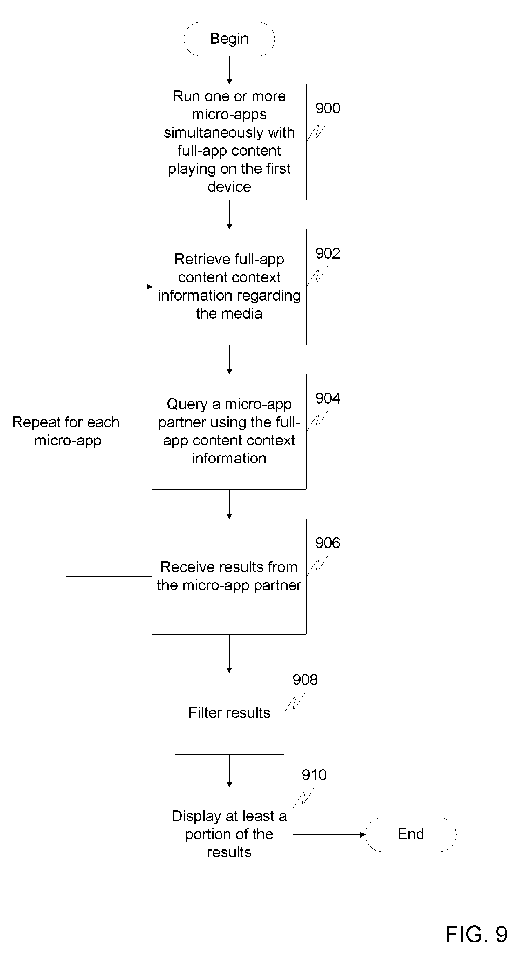

FIG. 9 is a flow diagram illustrating a method for enhancing full-app content playing on a first device in accordance with an embodiment of the present invention. At 900, one or more micro-apps are run simultaneously with full-all content playing on the first device. It should be noted that these micro-apps may be run on the first device or on other devices, based upon implementation. For example, the first device may be a shared device, and the micro-apps may be run on the shared device, an interaction device, or any combination thereof. For each of the micro-apps, a number of steps may then be executed. First, at 902, full-app content context information regarding the full-app content is retrieved. This context information may be retrieved in a number of different ways. In one embodiment, the full-app content context information is embedded as metadata in the media file or media stream, and the micro-app can intercept and decipher this embedded context information. In another embodiment, the fill-app content context information is deduced, either by the micro-app alone or in conjunction with other applications, some of which can be run on separate devices (such as a server that can be queried by the micro-app via the Internet). It should be noted that while this step is depicted as being performed for each micro-app, this may not actually mean that the step is performed separately for each micro-app. Specifically, embodiments are foreseen wherein the full-app content context information is extracted once and then fed to multiple micro-apps for query generation, or wherein a centralized adapter is used to query multiple micro-app partners to feed the multiple micro-apps.

At 904, a micro-app partner is queried using the full-app content context information. The micro-app partner may be located on the first device or on another device. Most typically, the micro-app partner will be located on a remote device, such as an Internet server as typically the micro-app partners will be third party providers. However, nothing in this document shall be construed as limiting the micro-app partners to such an implementation.

It should also be noted that, while not pictured in FIG. 9, the micro-app partner may be queried not only with just the full-app content context information, but with other context information as well. This other context information may aid the micro-app partner in returning more relevant results than if just the full-app content context information were used. Other such information can include, for example, user context information, device context information, and/or environmental context information.

At 906, results are received from the micro-app partner. These results may take many forms, again largely dependent on the type of the micro-app and the type of the micro-app partner. A mapping tool may return a graphical interactive map to be displayed, whereas an online retailer may return a list of products to browse.

At 908, the results may be filtered. This filtering can take many forms. In one embodiment, the filtering involves ranking the results received from the micro-app partners for each of at least two micro-apps and then only keeping the results from the micro-app having the highest rated results. In this manner, the "best micro-app wins" for each set of query results. In another embodiment, the filtering involves simply reducing the number of overall query results to a more manageable level.

At 910, at least a portion of the results are displayed or played. This may be performed while the full-app content is still playing, resulting in a user experience of "enhanced" media.

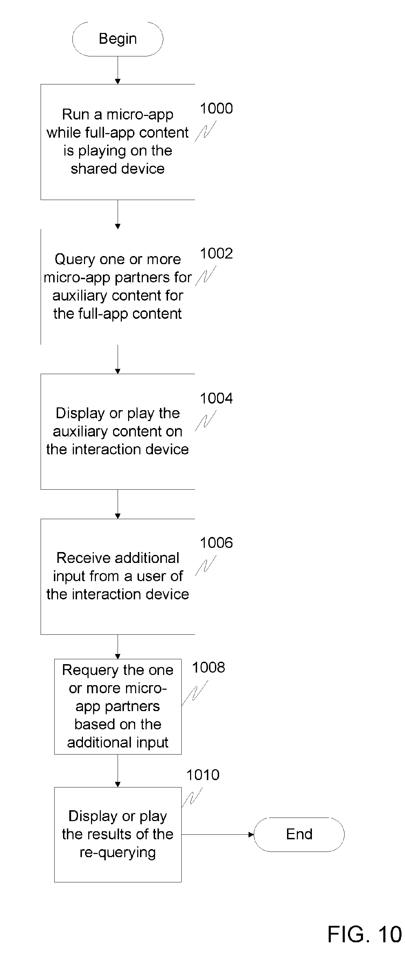

The embodiment of FIG. 9 describes using full-app content context information to query micro-app partners for results that cause an enhanced full-app content viewing experience for the user. FIG. 10 describes a different embodiment, where interaction devices are utilized to provide a different enhanced full-app content viewing experience. As described earlier, embodiments are also foreseen wherein both embodiments are combined.

FIG. 10 is a flow diagram illustrating a method for operating an interaction device in a system having a shared device and a plurality of interaction devices, in accordance with an embodiment of the present invention. This method may be performed at various interaction devices in the system, but that is not mandatory. Embodiments are possible where the method is only performed at one of the interaction devices. At 1000, a micro-app is run while full-app content is playing or shown on the shared device. At 1002, one or more micro-app partners are queried for auxiliary content for the playing media. At 1004, the auxiliary content is displayed or played on the interaction device. This may be performed through a user interface and display on the interaction device. At 1006, additional input may be received from a user of the interaction device. This may be performed through the user interface on the interaction device. At 1008, the one or more micro-app partners may be re-queried based on the additional input. At 1010, the results of the re-querying may be displayed or played on the display.

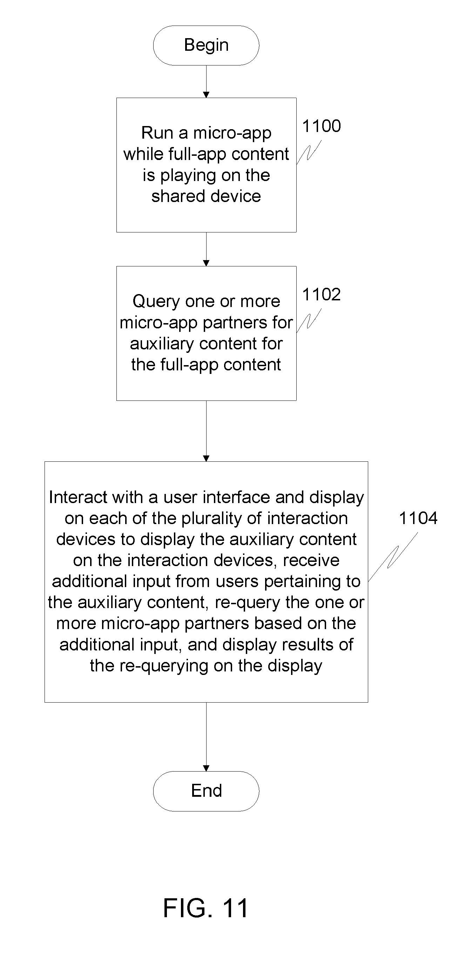

It should be noted that the embodiment of FIG. 10 is one in which the interaction device performs the querying of the micro-app partner. In an alternative embodiment, the shared device performs the querying of the micro-app partner and passes results to the interaction devices. This is described in FIG. 11. FIG. 11 is a flow diagram illustrating a method for operating a shared device in a system having the shared device and a plurality of interaction devices in accordance with an embodiment of the present invention. At 1100, a micro-app is run while full-app content is playing or shown on the shared device. At 1102, one or more micro-app partners are queried for auxiliary content for the playing full-app content. At 1104, a user interface and display on each of the plurality of interaction devices are interacted with to display the auxiliary content on the interaction devices, receive additional input from users pertaining to the auxiliary content, re-query the one or more micro-app partners based upon the additional input, and display results of the re-querying on the display. It should be noted that while this step describes interacting with more than one interaction device, it is not necessary that the same auxiliary content be sent to or displayed on each of the plurality of interaction devices. Various other factors may affect which auxiliary content is displayed on which interaction device. For example, the interaction device of an adult may play different content than that of a child.

As will be appreciated to one of ordinary skill in the art, the aforementioned example architectures can be implemented in many ways, such as program instructions for execution by a processor, as software modules, microcode, as computer program product on computer readable media, as logic circuits, as application specific integrated circuits, as firmware, as consumer electronic device, etc. and may utilize wireless devices, wireless transmitters/receivers, and other portions of wireless networks. Furthermore, embodiment of the disclosed method and system for displaying multimedia content on multiple electronic display screens can take the form of an entirely hardware embodiment, an entirely software embodiment, or an embodiment containing both software and hardware elements.

The term "computer readable medium" is used generally to refer to media such as main memory, secondary memory, removable storage, hard disks, flash memory, disk drive memory, CD-ROM and other forms of persistent memory. It should be noted that program storage devices, as may be used to describe storage devices containing executable computer code for operating various methods of the present invention, shall not be construed to cover transitory subject matter, such as carrier waves or signals. Program storage devices and computer readable medium are terms used generally to refer to media such as main memory, secondary memory, removable storage disks, hard disk drives, and other tangible storage devices or components.

The various aspects, features, embodiments or implementations of the invention described above can be used alone or in various combinations. The many features and advantages of the present invention are apparent from the written description and, thus, it is intended by the appended claims to cover all such features and advantages of the invention. Further, since numerous modifications and changes will readily occur to those skilled in the art, the invention should not be limited to the exact construction and operation as illustrated and described. Hence, all suitable modifications and equivalents may be resorted to as falling within the scope of the invention.

## Claims

1. A method for enhancing full-app content playing on a first device, the method comprising:
running one or more micro-apps simultaneously with the full-app content playing on the first device;
for each of the micro-apps:
retrieving full-app content context information regarding the full-app content;
querying a micro-app partner using the full-app content context information;
receiving results from the micro-app partner; and
displaying or playing at least a portion of the received results.

2. The method of claim 1, further comprising:
retrieving user, device, or environmental context information; and
wherein the querying includes querying the micro-app partner using both the full-app content context information and the user, the device, or the environmental context information.

3. The method of claim 1, wherein the retrieving includes examining metadata of the full-app content.

4. The method of claim 1, wherein the retrieving includes querying an external database for the full-app content context information corresponding to the full-app content.

5. The method of claim 1, further comprising, when there are at least two micro-apps running simultaneously with the full-app content playing:
ranking results received from the micro-app partners for each of at least two micro-apps; and
playing or displaying results only from the micro-app having the highest rated results.

6. The method of claim 1, wherein each of the micro-apps include a common scheme that allows full-app content context information to be shared across micro-apps.

7. A system comprising:
a shared device for playing full-app content;
a plurality of interaction devices in communication with the shared device, each interaction device comprising:
a user interface designed to receive user input; and
a display; and
one or more micro-apps, wherein the micro-apps are located on either the shared device or each of the plurality of interaction devices, wherein the micro-apps are designed to:
query one or more micro-app partners for auxiliary content for the playing full-app content; and
interact with the user interface and display on each of the plurality of interaction devices to display the auxiliary content on the interaction devices, receive additional input from users pertaining to the auxiliary content, re-query the one or more micro-app partners based upon the additional input, and display results of the re-querying on the display.

8. The system of claim 7, wherein each of the micro-apps is further designed to
retrieve full-app content context information regarding the media; and
wherein the querying of the one or more micro-app partners for auxiliary content is based at least partially on the retrieved full-app content context information.

9. The system of claim 8, wherein each of the plurality of interaction devices contains memory storing a user or a device profile, and wherein each of the micro-apps is further designed to retrieve the user, or the device profile from corresponding memory, wherein the querying of the one or more micro-app partners for auxiliary content is based at least partially on the retrieved user or device profile.

10. The system of claim 8, wherein each of the plurality of interaction devices contains an environmental sensor, and wherein each of the micro-apps is further designed to query a corresponding environmental sensor for environmental context information, wherein the querying of the one or more micro-app partners for auxiliary content is based at least partially on the environmental context information.

11. The system of claim 7, wherein at least one of the interaction devices is a tablet computer or a smartphone.

12. A method for operating a first interaction device in a system having a shared device and a plurality of interaction devices, the method comprising:
running a micro-app while full-app content is playing on the shared device;
retrieving full-app content context information regarding the full-app content;
querying, using the micro-app, a micro-app partner using the full-app content context information:
receiving results from the micro-app partner; and
displaying the results from the micro-app partner on a display on the first interaction device while the full-app content is playing on the shared device.

13. A shared device comprising:
means for playing full-app content;
means for running one or more micro-apps simultaneously with the full-app content playing;
means for retrieving full-app content context information regarding the media;
means for querying a micro-app partner using the full-app content context information;
means for receiving results from the micro-app partner; and
means for transmitting the received results to one or more interaction devices for display on the one or more interaction devices while the full-app content is playing on the shared device.

14. The shared device of claim 13, further comprising:
means for performing filtering of the received results.

15. The shared device of claim 13, further comprising:
means for dynamically categorizing the received results into tabs according to a predefined classification criteria.
